# EUROPÄISCHE PATENTSCHRIFT

(11) **EP 2 095 525 B1**
(45) Veröffentlichungstag und Bekanntmachung des Hinweises auf die Patenterteilung: **05.01.2011**
(21) Anmeldenummer: 06828521.2
(22) Anmeldetag: 17.11.2006
(51) Int. Cl.: H04B 3/23

(54) **VERFAHREN UND ANORDNUNG ZUR STEUERUNG VON ADAPTIVEN FILTERN**
METHOD AND ARRANGEMENT FOR CONTROLLING ADAPTIVE FILTERS
PROCÉDÉ ET DISPOSITIF POUR LA COMMANDE DE FILTRES ADAPTATIFS

(43) Veröffentlichungstag der Anmeldung: 02.09.2009
(73) Patentinhaber: SIEMENS AKTIENGESELLSCHAFT, 80333 München (DE)
(72) Erfinder: WURZ, Johann, 3910 Zwettl (AT)
(74) Vertreter: Fritzsche, Thomas
(86) Internationale Anmeldenummer: PCT/DE2006/002016
(87) Internationale Veröffentlichungsnummer: WO 2008/058493

(56) Entgegenhaltungen:
- EP-A- 0 760 575
- WO-A-93/21695
- DE-C1- 19 506 324

## Beschreibung

Die Erfindung betrifft ein Verfahren zum adaptiven Filtern von Signalen gemäß dem Gattungsbegriff des Anspruchs 1 sowie eine Anordnung zum adaptiven Filtern von Signalen gemäß dem Gattungsbegriff des Anspruchs 7.

Es ist bekannt, in der digitalen Signalverarbeitung adaptive Filter, also Filter, welche in der Lage sind, ihre Filterkoeffizienten eigenständig an das Eingabesignal anzupassen, einzusetzen.

Insbesondere bei dem Einsatz des adaptiven Filters bei so genannten Echo-Cancellern, welche vor allem in der Telekommunikation und insbesondere bei Sprachübertragung über auf dem Internet Protokoll (IP) basierenden Netzen - dem so genannten Voice over IP (VoIP) - eingesetzt werden, besteht das Problem, dass es zu Fehladaptionen kommt, wenn in einer Phase, in der sich der Filter adaptiert, schmalbandige Signale wie beispielsweise Sinus-Töne auftreten.

Ein adaptives Filter funktioniert nämlich ideal, wenn ein anliegendes Signal weißes Rauschen ist, da dann alle Frequenzen gleichzeitig auftreten und man vom Echopfad .(Übertragungskanal, Telefonleitung) die gesamte Information zur Berechnung der Koeffizienten des adaptiven Filters erhält. Bei schmalbandigen Signalen fehlt zu den nicht auftretenden Frequenzen die Information, so dass dies zu einem Wegdriften der Koeffizienten führen kann. Dies ist unter anderem in den Patentschriften EP-A-0760 575, DE 195 06 324 C1 und WO 93/21695A offenbart.

Hierzu ist es bekannt, die Adaptionsphase zu verlängern bis wieder ein breitbandiges Signal anliegt, welches idealer Weise einem weißen Rauschen gleichkommt und ein Indiz für das Erreichen optimalen Zustandes der Adaption darstellt. Ein zwischenzeitliches Wegdriften der das zur Auslöschung des Echos an das Echo angepassten Koeffizienten kann damit aber nicht verhindert werden.

Ferner ist es bekannt, die schmalbandigen Signale mittels eins Vergleichs des so genannten Crest-Faktors (Scheitelfaktor) eines empfangenen (Sprach-) Signals Rᵢₙ, welcher das Verhältnis zwischen Spitzenwert (Scheitelwert) und Effektivwert des Sprachsignals beschreibt, sowie dem arithmetischen Mittelwert empfangenen (Sprach-)Signals Rᵢₙ zu detektieren.

Nachteilig ist hierbei, dass der Crest-Faktor kein eindeutiges Zeichen für ein schmalbandiges Signal ist, da auch breitbandige Signale denselben Crest-Faktor erzeugen können. Auβerdem können auch schmalbandige Signale auftreten, die nicht über den Crest-Faktor erkennbar sind.

Es ist die Aufgabe der vorliegenden Erfindung, ein insbesondere für die Echo Cancellation, optimiertes Verfahren sowie Anordnung zur Steuerung von adaptiven Filtern anzugeben.

Diese Aufgabe von dem Verfahren wird gemäß dem Gattungsbegriff des Anspruchs 1 durch dessen kennzeichnende Merkmale sowie durch die Anordnung gemäß dem Gattungsbegriff des Anspruchs 7 durch dessen kennzeichnendes Merkmal gelöst.

Bei dem erfindungsgemäßen Verfahren zur Steuerung von adaptiven Filtern, wird in einem ersten Schritt bei einem zumindest zeitweise während einer Adaptionsphase des Filters auftretenden einen schmalbandigen Frequenzbereich aufweisenden ersten Eingangssignal am Eingang des Filters die Adaptionsphase solange fortgesetzt, bis eine vollständige Kompensation eines durch das erste Eingangssignal bedingten Echosignals gleichen Frequenzbereichs erfolgt, in einem zweiten Schritt bei Erreichen der vollständigen Kompensation des Echosignals eine Suspendierung der Adaptionsphase realisiert und in einem dritten Schritt ein Weiterführen der Adaptionsphase dann durchgeführt, wenn dem ersten Eingangssignal ein einen schmalbandigen Frequenzbereich aufweisendes sich zumindest um einen Frequenzwert vom Frequenzbereich des ersten Eingangssignals unterscheidendes zweites Eingangssignal dem ersten Eingangssignal folgt, wobei beginnend mit dem ersten Schritt eine Wiederholung der vorstehenden Schritte erfolgt, oder in einem vierten Schritt eine neue Adaptionsphase durchgeführt wird, wenn dem ersten Eingangssignal ein einen breitbandigen Frequenzbereich aufweisendes drittes Eingangssignal folgt.

Es wird also erfindungsgemäß ein erster Zustand realisiert, bei dem eine normale Adaption auf ein breitbandiges Signal erfolgt, ein zweiter Zustand, bei dem eine verminderte Adaption auf ein schmalbandiges Signal erfolgt sowie ein dritter Zustand, bei dem die Adaption suspendiert wird, wenn kein Schamalbandsignal mehr gegeben ist und eine vollständigen Kompensation des Echosignals in diesem schmalbandigen Frequenzbereich vorliegt. Dabei kann ein Zustandswechsel aus jedem der genannten Zuständen in jeden anderen erfolgen. Dies ist abhängig von der Signalabfolge.

Hierdurch wird gewährleistet, dass die Adaption angepasst an die Art der anliegenden Signale erfolgt und somit die bei schmalbandigen Signalen auftretende Problematik des Wegdriftens von Koeffizienten und der Fehladaptionen vermieden wird, weil Schmalbandsignal um Schmalbandsignal eine vollständige Kompensation des jeweiligen Echos hierzu erfolgt und durch die Suspendierung die Adaption erst dann wieder aufgenommen wird, wenn ein breitbandiges Signal anliegt und somit für eine reguläre Adaption optimale Bedingungen vorliegen.

Besonders Vorteilhaft ist es, wenn gemäß einer Weiterbildung die Adaptionsphase im ersten Schritt mit kleiner Schrittweite erfolgt. Hierdurch werden Instabilitäten der Adaption vermieden, die bei einer schnellen Adaption durch ein Schwingen der Koeffizienten verursacht werden würden.

Vorzugsweise und besonders von Vorteil ist es auch wenn die Erfindung derart weitergebildet wird, dass im ersten Schritt und/oder vierten Schritt eine Aktualisierung von Adaptionskoeffizienten erfolgt. Im ersten Schritt wird die erfindungsgemäße vorteilhafte Kernidee die Adaption an die schmalbandigen Signale anzupassen weiter unterstützt und insbesondere wenn mehrere schmalbandige Signale einander folgen von Vorteil und im zweiten Schritt, eine Neuadaption an das optimale Adaptionsbedingungen bietende breitbandige Signal erfolgt.

Vorzugsweise wird eine Detektion der Bandbreite des ersten, zweiten dritten Signals und jeweiligen Echos durch Filterung mittels einer Bandsperre, insbesondere eines Notch-Filters, durchgeführt. Diese Filterung ist besonders geeignet, ein Schmalbandsignal zu detektieren und insbesondere bei einer Filterung mittels Notchfilter ist eine Nullstelle des Filters, die sich nach der Adaption des Filters an das ihm zugeführte Signal ergibt, kann als Eingangsgröße für folgende Auswertungsschritte verwendet werden.

Besonders geeignet ist eine Weiterbildung der Erfindung, bei der eine Fortführung der Adaption im Rahmen des ersten Schrittes dann erfolgt, wenn detektiert wird, dass ein Eingangsignal schmalbandig ist und ein hieraus resultierendes Echosignal den gleichen Frequenzbereich aufweist und eine Suspendierung der Adaption dann erfolgt, wenn detektiert wird, dass ein Eingangsignal schmalbandig ist und ein hieraus resultierendes Echosignal einen anderen Frequenzbereich aufweist - letzteres liefert vorteilhafter Weise den Hinweis, dass der Echo Canceller ein etwaiges vorangehendes durch ein schmalbandiges Signal verursachtes Echo vollständig kompensiert hat - sowie die Adaption im Rahmen des dritten Schrittes aufgenommen wird, wenn detektiert wird, dass das Eingangssignal breitbandig ist.

Erfasst gemäß einer Weiterbildung der Erfindung der Frequenzbereich eines schmalbandigen Signals eine Untermenge eines durch einen Übertragungskanal gegebenen maximalen Frequenzbereichs und wird die Untermenge mit einem ersten Parameter verglichen, so lässt sich ein mittels beispielsweise durch Simulation gewonnener Wert für einen die Eigenschaft "schmalbandig" optimal wiedergebender Bereich definieren. "Schmalbandig" bedeutet daher einen hinreichend kleinen Frequenzbereich bis hin zu einer einzigen Frequenz.

Der erfindungsgemäße adaptive Filter zeichnet sich durch Steuerungsmittel zur Durchführung der vorstehend angeführten Verfahrensweisen aus und erlaubt somit auf vorteilhafte Weise die Implementierung und Realisierung des erfindungsgemäßen Verfahrens, womit dessen Vorteile hierdurch ebenfalls zur Geltung kommen.

Vorzugsweise ist der adaptive Filter bei einer Weiterbildung mit
- zumindest einer ersten Bandsperreinrichtung zur Filterung eines Eingangssignals des adaptiven Filters, die derart ausgestaltet ist, das ein schmalbandiges Eingangssignal erkannt wird, und wobei ein erster Frequenzbereich des Eingangssignals bestimmt wird,
- zumindest einer Energieermittlungseinrichtung zur Ermittlung eines Pegels des Eingangssignals und des gefilterten Eingangsignals, welches ein Teil der erfindungsgemäßen Schmalbanderkennung ist,
- zumindest eine erste Vergleichereinrichtung zum Vergleich der Pegel, wobei zumindest ein erstes Steuersignal generiert wird, welches beispielsweise als Ergebnis einer boolschen Logikentscheidung "Schmalbandig JA/NEIN" wiedergibt,
- zumindest einer zweiten Bandsperreinrichtung zur Filterung eines seitens des adaptiven Filters empfangenen Echosignals, die derart ausgestaltet ist, das ein zweiter Frequenzbereich des Echosignals bestimmt wird,
- zumindest einer Subtraktionseinrichtung, die derart ausgestaltet ist, dass sie den ersten Frequenzbereich vom zweiten Frequenzbereich subtrahiert und an eine Betragsbildereinheit zur Bildung des Betrags aus dem Ergebnis der Subtraktion weiterleitet,
- zumindest einer zweiten Vergleichereinrichtung zum Vergleich des Betrags des Ergebnisses mit einem ersten eine mit der Eigenschaft schmalbandig korrelierenden Parameter, wobei zumindest ein zweites Steuersignal generiert wird,
- einer Auswertungslogik, die derart ausgestaltet ist, dass sie auf Grundlage des ersten Steuersignals und des zweiten Steuersignals den adaptiven Filter derart steuert, dass eine Fortführung der Adaption erfolgt die erste Vergleichereinrichtung feststellt, dass das Eingangsignal schmalbandig ist und das Echosignal den gleichen Frequenzbereich aufweist, eine Suspendierung der Adaption dann erfolgt, wenn detektiert wird, dass das Eingangsignal schmalbandig ist und das Echosignal den einen anderen Frequenzbereich aufweist, die Adaption im Rahmen des dritten Schrittes aufgenommen wird, wenn detektiert wird, dass das Eingangssignal (Rᵢₙ) breitbandig ist, also als erstes Steuersignal das insbesondere logische Signal "Schalbandig NEIN" vorliegt.
ausgestaltet.

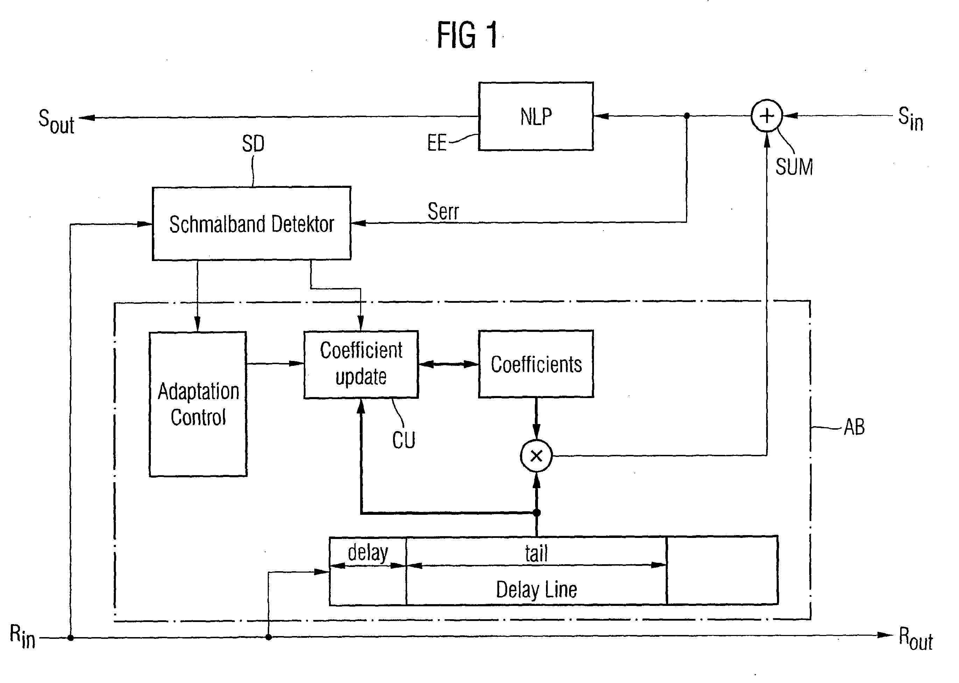

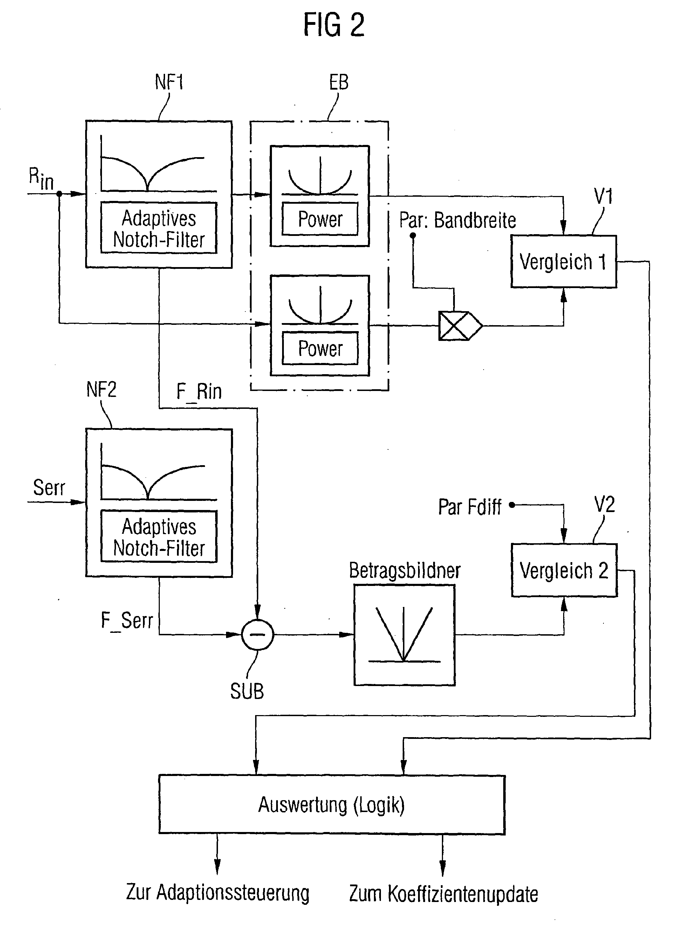

Weitere Einzelheiten sowie Vorteile der Erfindung werden ausgehend von in den Figuren 1 und 2 dargestellten Ausführungsbeispielen näher erläutert. Dabei zeigt
- Figur 1: ein Blockschaltbild eines das erfindungsgemäße Ver- fahren umsetzenden Echo Cancellers, welcher eine erfindungsgemäße Steuerung der Adaption aufgrund einer Schmalbandsignaldetektion durchführt,
- Figur 2: ein Blockschaltbild einer das erfindungsgemäße Ver- fahren umsetzenden Steuerung.

In Figur 1 ist das Blockschaltbild eines das erfindungsgemäße Verfahren umsetzenden Echo Cancellers dargestellt, welcher eine erfindungsgemäße Steuerung der Adaption aufgrund einer Schmalbandsignaldetektion durchführt.

In der schematischen Darstellung ist daher ein zwischen dem Echopfad, d.h. dem Pfeil zwischen einem ersten Port Sᵢₙ, auf dem auf den Echopfad ein zu sendendes Sprachsignal abgegeben wird, und einem zweiten Port Sₒᵤₜ, auf dem ein Echosignal vom Echopfad ankommt sowie einem dritten Port Rᵢₙ, auf dem zu empfangende Sprachsignale vom Echopfad eingehen und über einen vierten Port Rₒᵤₜ an den Echopfad abgegeben werden, erfindungsgemäß ausgestalteter Echo Canceller dargestellt.

Dargestellt ist weiter ein eine adaptive Filterung realisierender Adaptionsblock AB, der für die Adaption notwendgie Koeffizienten und hierauf basierend ein Ausgangssignal, ein geschätztes Echosignal, erzeugt, welches zum Zwecke der Auslöschung eines Echos an einen Summierer SUM geleitet wird, wo es vom auf dem Echopfad über den zweiten Port Sₒᵤₜ empfangenen echobehafteten Signal abgezogen wird und vom Echo im Idealfall vollständig bereinigt über den ersten Port Sₒᵤₜ abgegeben wird.

Der Pfad zwischen dem ersten Port Sᵢₙ und dem zweiten Port Sₒᵤₜ weist zudem einen nichtlinearen Prozessor auf, der bei einem Echo Canceller unter anderem die Funktion hat, Reste von Störsignalen, welche das adaptive Filter nicht kompensieren kann, zu entfernen, beispielsweise in dem es ein verbleibendes Störsignal abschwächt und ein künstliches Hintergrundrauschen, auch als so genanntes Comfort Noise bezeichnet, bei Bedarf einfügt.

Zu erkennen ist ferner, dass der Adaptionsblock AB die hierzu erforderlichen aus dem Stand der Technik bekannten Verarbeitungsblöcke aufweist, wobei zur Umsetzung des erfindungsgemäβen Verfahrens zumindest die Adaptionssteuerung AC und eine den üblichen Koeffizientenupdate durchführende Einrichtung CU modifiziert ist, um mit der erfindungsgemäßen Detektion von Schmalbandsignalen zu interagieren und die darauf gründende Steuerung der Adaption durchzuführen.

Zu dieser Steuerung des Adaptionsblocks AB werden daher, wie der Darstellung zu entnehmen ist, der Adaptionssteuerung AC neben weiteren üblichen Signalen durch den erfindungsgemäßen Schmalbanddetektor SD zumindest ein Steuersignal zugeführt, wie mit dem Pfeil angedeutet ist. Ferner wird vom Schmalbanddetektor SD zumindest ein Steuersignal auch an die Koeffizientenupdate-Einrichtung CU zugeführt.

Erfindungsgemäß wird damit eine Sperrung der Adaption bewirkt, wenn durch ein am dritten Port Rᵢₙ anliegendes schmalbandiges Störsignal - beispielsweise Sinussignale wie ein Freizeichen, DTMF Töne oder Ähnliches - bewirktes Echo Sₑᵣᵣ mit gleichem schmalbandigem Frequenzbereich vollständig kompensiert ist, wobei die Sperrung dann aufgehoben wird, wenn am dritten Port Rᵢₙ wieder ein breitbandiges Signal anliegt, welches ein Sprachsignal indiziert und somit wieder eine reguläre Adaption zur Echokompensation angezeigt ist.

Während das schmalbandige Signal am dritten Port Rᵢₙ anliegt, erfolgt dabei eine Adaption mit kleiner Schrittweite. Ferner erfolgt, falls sich die Frequenz des schmalbandigen Signals bzw. die Frequenz der Grundschwingung des am dritten Port Rᵢₙ anliegenden schmalbandigen Signals ändert, die Sperrung erst wenn auch ein hierdurch erzeugtes Echo vollständig kompensiert ist. D.h. die Adaption mit kleiner Schrittweite wird solange fortgesetzt als schmalbandige Signale einander folgen und erst mit Kompensation aller hieraus folgender Echos gesperrt, d.h. bis zum Anliegen des breitbandigen Signals suspendiert.

Ein Ausführungsbeispiel einer dieses erfindungsgemäße Verfahren ermöglichenden Auswertungslogik ist in Figur 2 dargestellt.

Zu erkennen ist ein erstes adaptives Schmalbandfilter NF1, auch als Bandsperre bezeichnet, welches in dem dargestellten Ausführungsbeispiel als so genanntes Notchfilter (Kerbfilter) ausgestaltet ist. Dieses adaptiert sich an den Frequenzbereich bzw. die Frequenz des Signals F_Rin ein Schmalbandsignal Rᵢₙ und führt das gefilterte Signal zu einem Energieermittlungsblock EB.

Dabei stellt das erste adaptive Notchfilter NF1 seine Nullstelle so ein, dass eine maximale Sperrung des Signals erfolgt. Beispielsweise wird im Fall, dass das schmalbandige Signal ein reines Sinussignal ist, das anliegende Schmalbandsignal Rᵢₙ zu 100% geblockt, so dass am Ausgang des ersten Notchfilter NF1 kein Signal an einem Leistungsrechner EB, der den quadratischen Mittelwert bildet, anliegt.

Ferner wird diesem Energieermittlungsblock (Leistungsrechner) EB das Signal Rᵢₙ auch in ungefilterter Form weitergeleitet, so dass sowohl für das gefilterte als auch ungefilterte Signal Rᵢₙ ein Pegel der Leistung, d.h. ein quadratischer Mittelwert, ermittelt wird.

Dabei wird nun die Leistung bzw. der Pegel des ungefilterten Signals einem Multiplizierer zugeführt und mit einem ersten Parameter Par: Bandbreite multipliziert. Der erste Parameter ist dabei ein Wert mit der die Eigenschaft "schmalbandig" bestimmt werden kann.

Das Ergebnis der Multiplikation sowie die Leistung bzw. der Pegel des gefilterten Signals werden des Weiteren einer ersten Vergleichseinrichtung V1 zugeführt. Diese vergleicht die beiden Pegel, wobei dieser Vergleich als Ergebnis eine Detektion dahingehend ermöglicht, ob das anliegende Signal Rᵢₙ ein Signal mit breitem Frequenzband oder schmalem Frequenzband ist. Die Bewertung schmalbandig liegt vor wenn das Ergebnis der Multiplikation größer als die Leistung bzw. der Pegel des gefilterten Signals ist.

Ist nämlich das Signal Rᵢₙ breitbandig, wird erfindungsgemäß eine Adaption mit normaler Schrittweite durchgeführt, da dies ja ein Indiz für ein Sprachsignal ist, so dass sich auf die Eliminierung von Störungen durch Echos, die insbesondere durch ein Gegensprechen ausgelöst sind, durch den Adaptionsblock AB konzentriert werden kann, weil keine Gefahr eines Wegdriftens der Adaptionskoeffizienten besteht, welches im Fall von einem schmalbandigen Eingangssignal Rin jedoch der Fall wäre. Daher wird durch eine Auswertungslogik der Adaptionsblock AB durch zumindest ein Signal entsprechend gesteuert.

Ist das anliegende Signal Rᵢₙ gemäß dem Ermittlungsergebnis nicht breitbandig, erfolgt erfindungsgemäß eine Adaption mit kleineren Adaptionsschritten, welches die gezielte Eliminierung des schmalbandigen Echos zum Ziel hat. Diese Anpassung der Adaptionsgeschwindigkeit verhindert vorteilhafter Weise ein instabiles Verhalten der Adaption.

Zur Anpassung der Adaptionsgeschwindigkeit wird daher seitens der Auswertelogik der Adaptionsblock AB entsprechend gesteuert und ein Update der Adaptionskoeffizienten durchgeführt und die Koeffizientenupdate-Einrichtung CU entsprechend angesteuert, welches den erfindungsgemäßen Vorteil des Vermeidens eines Wegdriftens gewährleistet.

Durch das erfindungsgemäße Verfahren wird also vorteilhafter Weise dem Problem begegnet, dass bei Anliegen eines schmalbandigen Signals an einer Leitung anliegt und somit nur ein Echo in diesem vergleichsweise kleinen Frequenzbereich erzeugt, so dass das Verhalten dieser Leitung, d.h. des dort in der Regel gegebenen Echos, in den hierzu disjunkten Frequenzbereichen daher unbekannt ist und deswegen durch das adaptive Filter nicht kompensiert werden kann bzw. sogar zu einer Verstärkung des Echos bei diesen unbekannten Frequenzen führen kann.

Der erste adaptive Schmalbandfilter NF1 liefert hierzu wie oben dargelegt, durch die Nullstellenermittlung auch eine Sperrfrequenz, die zum Beispiel die bei einer Sinusschwingung gegebene einzige Frequenz des Störsignals sein kann bzw. diejenige Sperrfrequenz bei der der erste Notchfilter NF1 am wenigsten Signalanteile des anliegenden Signals Rᵢₙ durchlässt. Diese Sperrfrequenz wird anschließend einem Subtraktionsglied SUB zugeführt. Diesem Subtraktionsglied wird auch die Sperrfrequenz des Echos Sₑᵣᵣ zugeführt, welche durch einen zweiten Notchfilter NF2 in analoger Weise wie beim ersten Notchfilter NF1, gefunden wird. Diese beiden Größen werden voneinander subtrahiert das Ergebnis erst einem Betragsbildner und anschließend einer zweiten Vergleichereinrichtung V2 zugeführt.

Diese zweite Vergleichereinrichtung V2 vergleicht dann den Betrag mit einem zweiten Parameter Par Fdiff durch den bestimmt wird, bei welcher Frequenzdifferenz die Adaption ausgesetzt wird.

Ergibt nämlich der durch die zweite Vergleichereinrichtung V2 durchgeführte Vergleich, dass der Betrag des Subtraktionsergebnisses größer ist als der zweite Parameter, so wird die Adaption gesperrt im Sinne von suspendiert und eine entsprechende Steuerung seitens der Auswertungslogik durchgeführt, da die Frequenzen als sich unterscheidend.eingestuft werden. Andernfalls wird die Adaption fortgesetzt. Das heißt, es erfolgt die oben angesprochene Adaption mit kleineren Adaptionsschritten, welche mit der genannten Steuerung veranlasst wird.

Im Grunde wird also wenn sich die Frequenz ändert d.h. es eine neue Frequenz an der Leitung(Echo) anliegt und dies weitere Informationen über das Echo liefert, wird das adaptive Filter in die Lage versetzt das Echo auch in diesen Frequenzbereich zu kompensieren. Sobald dieser Frequenzbereich durch das adaptive Filter kompensiert ist verschwindet diese Frequenz am zweiten Notchfilter NF₂. Dieses stellt sich dann sofort auf eine andere Frequenz ein, vorzugsweise auf die Oberschwingungen, die durch die nichtlinearen Verzerrungen entstehen. Dies wird dann über die Subtraktionseinrichtung SUB und dem Betragsbildner erkannt und zum Anhalten der Adaption benutzt.

Mit dem vorstehend beschriebenen Verfahren und der sie durchführenden Anordnung werden somit Effekte durch nichtlineare Verzerrungen der in der Kommunikation bekannten A-Law. - bzw. µ-Law-Codecs (G.711) entstehende Oberschwingungen, die das Wegdriften der Koeffizienten des adaptiven Filters verursachen, vermieden. Eine Verstimmung der Adaption, die sich andernfalls sonst nach etwa 10-120 Sekunden einstellen würde, und somit hieraus resultierenden Fehladaptionen werden damit vermieden. Mit dem erfindungsgemäßen Verfahren und der sie durchführenden Anordnung ist mit einer geeigneten Koeffizientenberechnung sogar auch eine vollständige Adaption möglich wenn die Frequenzen in einer beliebigen zeitlichen Abfolge auftreten.

## Patentansprüche

1. Verfahren zur Steuerung von adaptiven Filtern, **dadurch gekennzeichnet, dass**
a) in einem ersten Schritt bei einem zumindest zeitweise während einer Adaptionsphase des Filters auftretenden einen schmalbandigen Frequenzbereich aufweisenden ersten Eingangssignal am Eingang des Filters die Adaptionsphase solange fortgesetzt wird, bis eine vollständige Kompensation eines durch das erste Eingangssignal bedingten Echosignals gleichen Frequenzbereichs erfolgt,
b) in einem zweiten Schritt bei Erreichen der vollständigen Kompensation des Echosignals eine Suspendierung der Adaptionsphase erfolgt,
c) in einem dritten Schritt ein Weiterführen der Adaptionsphase dann erfolgt, wenn dem ersten Eingangssignal ein einen schmalbandigen Frequenzbereich aufweisendes sich zumindest um einen Frequenzwert vom Frequenzbereich des ersten Eingangssignals unterscheidendes zweites Eingangssignal dem ersten Eingangssignal folgt, wobei beginnend mit dem ersten Schritt eine Wiederholung der Schritte erfolgt,
d)in einem vierten Schritt eine neue Adaptionsphase gestartet wird, wenn dem ersten Eingangssignal ein einen breitbandigen Frequenzbereich aufweisendes drittes Eingangssignal folgt.

2. Verfahren nach Anspruch 1, **dadurch gekennzeichnet, dass** die Adaptionsphase im ersten Schritt mit kleiner Schrittweite erfolgt.

3. Verfahren nach dem vorhergehenden Anspruch, **dadurch gekennzeichnet, dass** im ersten und/oder vierten Schritt eine Aktualisierung von Adaptionskoeffizienten erfolgt.

4. Verfahren nach einem der vorhergehenden Ansprüche, **dadurch gekennzeichnet, dass** eine Detektion der Bandbreite des ersten, zweiten dritten Signals und jeweiligen Echos durch Filterung mittels einer Bandsperre, insbesondere eines NotchFilters, durchgeführt wird.

5. Verfahren nach einem der Ansprüche 1 bis 4, **dadurch gekennzeichnet, dass**
a) eine Fortführung der Adaption im Rahmen des ersten Schrittes dann erfolgt, wenn detektiert wird, dass ein Eingangsignal (Rᵢₙ) schmalbandig ist und ein hieraus resultierendes Echosignal (Sₑᵣᵣ) den gleichen Frequenzbereich aufweist,
b) eine Suspendierung der Adaption dann erfolgt, wenn detektiert wird, dass ein Eingangsignal (Rᵢₙ) schmalbandig ist und ein hieraus resultierendes Echosignal (Sₑᵣᵣ) einen anderen Frequenzbereich aufweist,
c) die Adaption im Rahmen des dritten Schrittes aufgenommen wird, wenn detektiert wird, dass das Eingangssignal (Riₙ) breitbandig ist.

6. Verfahren nach dem vorhergehenden Anspruch, **dadurch gekennzeichnet, dass**
a) der Frequenzbereich eines schmalbandigen Signals (Rᵢₙ; Sₑᵣᵣ) eine Untermenge eines durch Übertragungskanal gegeben maximalen Frequenzbereiches umfasst,
b) die Untermenge mit einem ersten Parameter verglichen wird.

7. Adaptiver Filter **gekennzeichnet durch** Steuerungsmittel zur Durchführung des Verfahrens nach einem der vorhergehenden Ansprüche durchführen.

8. Adaptiver Filter nach Anspruch 7 **gekennzeichnet durch**
a) zumindest einer ersten Bandsperreinrichtung zur Filterung eines Eingangssignals (Rᵢₙ) des adaptiven Filters, die derart ausgestaltet ist, das ein schmalbandiges Eingangssignal erkannt wird, und wobei ein erster Frequenzbereich (F_Rin) des Eingangssignals bestimmt wird,
b) zumindest einer Energieermittlungseinrichtung (EE) zur Ermittlung eines Pegels des Eingangssignals und des gefilterten Eingangsignals,
c) zumindest eine erste Vergleichereinrichtung (V1) zum Vergleich der Pegel, wobei zumindest ein erstes Steuersignal generiert wird,
d) zumindest einer zweiten Bandsperreinrichtung zur Filterung eines seitens des adaptiven Filters empfangenen Echosignals (Sₑᵣᵣ), die derart ausgestaltet ist, das ein zweiter Frequenzbereich (F_Rin) des Echosignals bestimmt wird,
e) zumindest einer Subtraktionseinrichtung (SUB), die derart ausgestaltet ist, dass sie den ersten Frequenzbereich vom zweiten Frequenzbereich (F_Serr) subtrahiert und an eine Betragsbildereinheit zur Bildung des Betrags aus dem Ergebnis der Subtraktion weiterleitet,
f) zumindest einer zweiten Vergleichereinrichtung zum Vergleich des Betrags des Ergebnisses mit einem ersten eine mit der Eigenschaft schmalbandig korrelierenden Parameter, wobei zumindest ein zweites Steuersignal generiert wird,
g) einer Auswertungslogik, die derart ausgestaltet ist, dass sie auf Grundlage des ersten Steuersignals und des zweiten Steuersignals den adaptiven Filter derart steuert, dass
g1)eine Fortführung der Adaption erfolgt die erste Vergleichereinrichtung (V1) feststellt, dass dass Eingangsignal (Rᵢₙ) schmalbandig ist und das Echosignal (Sₑᵣᵣ) den gleichen Frequenzbereich aufweist,
g2) eine Suspendierung der Adaption dann erfolgt, wenn detektiert wird, dass das Eingangsignal (Rᵢₙ) schmalbandig ist und das Echosignal (Sₑᵣᵣ) den einen anderen Frequenzbereich aufweist,
g3)die Adaption im Rahmen des dritten Schrittes aufgenommen wird, wenn detektiert wird, dass das Eingangssignal (Rᵢₙ) breitbandig ist.

## Claims

1. Method for controlling adaptive filters, **characterized in that**
a) in a first step, with a first input signal at the input of the filter, said input signal having a narrowband frequency range and occurring at least temporarily during an adaptation phase of the filter, the adaptation phase is continued until complete compensation of an echo signal is effected, said echo signal having the identical frequency and being caused by the first input signal,
b) in a second step, when complete compensation of the echo signal is obtained, suspension of the adaptation phase is effected,
c) in a third step, continuation of the adaptation phase is effected whenever a second input signal, having a narrow-band frequency range and differing from the frequency range of the first input signal at least by one frequency value, follows the first input signal, wherein the steps are repeated beginning with the first step,
d) in a fourth step, a new adaptation phase is started when a third input signal having a broadband frequency range follows the first input signal.

2. Method according to Claim 1, **characterized in that** the adaptation phase in the first step is effected with a smaller step width.

3. Method according to the preceding claim, **characterized in that** adaptation coefficients are updated in the first and/or fourth step.

4. Method according to one of the preceding claims, **characterized in that** detection of the bandwidth of the first, second, third signals and respective echoes is carried out by filtering by means of a band stop, in particular a notch filter.

5. Method according to one of Claims 1 to 4, **characterized in that**
a) continuation of the adaptation is effected within the first step whenever it is detected that a input signal (Rᵢₙ) is narrowband and an echo signal (Sₑᵣᵣ) resulting therefrom has the identical frequency range,
b) suspension of the adaptation is effected whenever it is detected that an input signal (Rᵢₙ) is narrowband and an echo signal (Sₑᵣᵣ) resulting therefrom has a different frequency range,
c) the adaptation is resumed within the third step if it is detected that the input signal (Rᵢₙ) is broadband.

6. Method according to the preceding claim, **characterized in that**
a) the frequency range of a narrowband signal (Rᵢₙ; Sₑᵣᵣ) includes a subset of a maximum frequency range provided by the transmission channel,
b) the subset is compared to a first parameter.

7. Adaptive filter **characterized by** control means for accomplishing the method according to one of the preceding claims.

8. Adaptive filter according to Claim 7 **characterized by**
a) at least one first band-stop device for filtering an input signal (Rᵢₙ) of the adaptive filter, which is designed in such a manner that a narrowband input signal is recognized, and wherein a first frequency range (F_Rin) of the input signal is determined,
b) at least one power determining device (EE) for determining a level of the input signal and of the filtered input signal,
c) at least a first comparator device (V1) for comparing the levels, wherein at least one first control signal is generated,
d) at least one second band-stop device for filtering an echo signal (Sₑᵣᵣ) received by the adaptive filter, said device being designed in such a manner that a second frequency range (F_Rin) of the echo signal is determined,
e) at least one subtracting device (SUB) that is developed in such a manner that it subtracts the first frequency range from the second frequency range (F_Serr) and forwards it to an absolute value generating unit for forming the absolute value from the result of the subtraction,
f) at least one second comparator device for comparing the absolute value of the result to a first parameter correlating in a narrowband manner with the characteristic, wherein at least one second control signal is generated,
g) an evaluation logic that is developed in such a manner that, on the basis of the first control signal and of the second control signal, it controls the adaptive filter in such a manner that
g1) continuation of the adaptation is effected if the first comparator device (V1) establishes that input signal (Rᵢₙ) is narrowband and the echo signal (Sₑᵣᵣ) has the identical frequency range,
g2) suspension of the adaptation is effected if it is detected that the input signal (Rᵢₙ) is narrowband and the echo signal (Sₑᵣᵣ) has a different frequency range,
g3) the adaptation is resumed within the third step if it is detected that the input signal (Rᵢₙ) is broadband.

## Revendications

1. Procédé de commande de filtres adaptatifs, **caractérisé en ce que**
a) au cours d'une première étape, pour un premier signal d'entrée, survenant au moins temporairement pendant une phase d'adaptation du filtre et présentant une gamme de fréquences à bande étroite, à l'entrée du filtre, la phase d'adaptation continue jusqu'à ce qu'une compensation complète d'un signal d'écho dû au premier signal d'entrée et de gamme de fréquences identique ait lieu,
b) au cours d'une deuxième étape, lorsque la compensation complète du signal d'écho est obtenue, la phase d'adaptation est suspendue,
c) au cours d'une troisième étape, la phase d'adaptation se poursuit si le premier signal d'entrée est suivi d'un deuxième signal d'entrée présentant une gamme de fréquences à bande étroite et se distinguant au moins par une valeur de fréquence de la gamme de fréquences du premier signal d'entrée, dans lequel les étapes sont répétées en commençant par la première étape,
d) au cours d'une quatrième étape, une nouvelle phase d'adaptation est commencée si le premier signal d'entrée est suivi d'un troisième signal d'entrée présentant une gamme de fréquences à bande large.

2. Procédé selon la revendication 1, **caractérisé en ce que** la phase d'adaptation à la première étape est effectuée par petits incréments.

3. Procédé selon la revendication précédente, **caractérisé en ce qu'**à la première et/ou quatrième étape, une mise à jour de coefficients d'adaptation est effectuée.

4. Procédé selon l'une quelconque des revendications précédentes, **caractérisé en ce qu'**une détection de la largeur de bande du premier, deuxième, troisième signal et de l'écho respectif est effectuée par un filtrage au moyen d'un dispositif à suppression de bande, en particulier d'un filtre coupe-bande.

5. Procédé selon l'une quelconque des revendications 1 à 4, **caractérisé en ce que**
a) l'adaptation continue dans le cadre de la première étape lorsqu'il est détecté qu'un signal d'entrée (Rᵢₙ) est à bande étroite et qu'un signal d'écho (Sₑᵣᵣ) qui en résulte présente la même gamme de fréquences,
b) l'adaptation est suspendue lorsqu'il est détecté qu'un signal d'entrée (Rᵢₙ) est à bande étroite et qu'un signal d'écho (Sₑᵣᵣ) qui en résulte présente une gamme de fréquences différente,
c) l'adaptation est reprise dans le cadre de la troisième étape lorsqu'il est détecté que le signal d'entrée (Rᵢₙ) est à bande large.

6. Procédé selon la revendication précédente, **caractérisé en ce que**
a) la gamme de fréquences d'un signal à bande étroite (Rᵢₙ ; Sₑᵣᵣ) comprend un sous-ensemble d'une gamme de fréquences maximale donnée par la voie de transmission,
b) le sous-ensemble est comparé à un premier paramètre.

7. Filtre adaptatif, **caractérisé par** des moyens de commande pour exécuter le procédé selon l'une quelconque des revendications précédentes.

8. Filtre adaptatif selon la revendication 7 **caractérisé par**
a) au moins un premier dispositif de suppression de bande pour filtrer un signal d'entrée (Rᵢₙ) du filtre adaptatif et qui est configuré de telle sorte qu'un signal d'entrée à bande étroite est reconnu, et dans lequel une première gamme de fréquences (F_Rᵢₙ) du signal d'entrée est déterminée,
b) au moins un dispositif de détermination d'énergie (EE) pour déterminer un niveau du signal d'entrée et du signal d'entrée filtré,
c) au moins un premier dispositif de comparaison (V1) pour comparer les niveaux, dans lequel au moins un premier signal de commande est généré,
d) au moins un deuxième dispositif de suppression de bande pour filtrer un signal d'écho (Sₑᵣᵣ) reçu du côté du filtre adaptatif et qui est configuré de telle sorte qu'une deuxième gamme de fréquences (F_Rᵢₙ) du signal d'écho est déterminée,
e) au moins un dispositif de soustraction (SUB) qui est configuré de telle sorte qu'il soustrait la première gamme de fréquences de la deuxième gamme de fréquences (F_Sₑᵣᵣ) et la transmet à une unité de formation de valeur pour former une valeur à partir du résultat de la soustraction,
f) au moins un deuxième dispositif de comparaison pour comparer la valeur du résultat à un premier paramètre en corrélation à bande étroite avec la propriété, dans lequel au moins un deuxième signal de commande est généré,
g) une logique d'évaluation qui est configurée de telle sorte qu'elle commande sur la base du premier signal de commande et du deuxième signal de commande le filtre adaptatif de telle sorte que
g1) l'adaptation continue, que le premier dispositif de comparaison (V1) constate que le signal d'entrée (Rᵢₙ) est à bande étroite et le signal d'écho (Sₑᵣᵣ) présente la même gamme de fréquences,
g2) l'adaptation est ensuite suspendue lorsqu'il est détecté que le signal d'entrée (Rᵢₙ) est à bande étroite et que le signal d'écho (Sₑᵣᵣ) présente une gamme de fréquences différente,
g3) l'adaptation est reprise dans le cadre de la troisième étape lorsqu'il est détecté que le signal d'entrée (Rᵢₙ) est à bande large.
